(19) Europäisches Patentamt
European Patent Office
Office européen des brevets

(11) Veröffentlichungsnummer: **0 314 982**
**A2**

(12) **EUROPÄISCHE PATENTANMELDUNG**

(21) Anmeldenummer: **88117443.7**

(22) Anmeldetag: **19.10.88**

(51) Int. Cl.⁴: **H02M 7/538**

(30) Priorität: **04.11.87 DE 3737378**

(43) Veröffentlichungstag der Anmeldung:
**10.05.89 Patentblatt 89/19**

(84) Benannte Vertragsstaaten:
**AT BE CH DE ES FR GB IT LI SE**

(71) Anmelder: **Dynamit Nobel Aktiengesellschaft**
**Postfach 12 61**
**D-5210 Troisdorf(DE)**

(72) Erfinder: **Steiner, Ulrich, Dipl.-Ing.**
**Adenauerstrasse 32**
**D-5210 Troisdorf-Spich(DE)**

(54) **Wechselrichter für hohe Spannungen und hohe Frequenzen.**

(57) Bei einem wechselrichter mit vier steuerbaren Leistungsschaltern (5, 6, 7, 8), lassen sich die Schaltgeschwindigkeit steigern und der Schaltungsaufwand reduzieren, wenn zur Steuerung der potentialmäßig hoch liegenden Leistungsschalter (5 bzw. 8) die Steuerspannung von Zenerdioden (13 bzw. 14), die in Serie zu den potentialmäßig tief liegenden Leistungsschaltern (6 bzw. 7) liegen, abgegriffen wird, wobei die Zenerdioden (13 bzw. 14) so eingebaut sind, daß sie leiten, wenn die zugehörigen Schalter (6 bzw. 7) geschlossen sind. Als Schalter sind besonders NKanal MOS-Transistoren, NPN-Bipolartransistoren oder Thyristoren geeignet. Der Wechselrichter ist als Stromgenerator zum Ansteuern elektronischer Zünder besonders geeignet.

FIGUR I

EP 0 314 982 A2

## Wechselrichter für hohe Spannungen und hohe Frequenzen

Die Erfindung richtet sich auf einen Wechselrichter, enthaltend eine geerdete Gleichspannungsquelle, vier steuerbare Leistungsschalter, eine Steuereinrichtung und einen Wechselspannungsausgang.

Wechselrichter sind bekannt. Sie werden beispielsweise zur Steuerung von Synchrommotoren benötigt, weil damit eine kontinuierliche Drehzahlsteuerung von Null bis über die Nenndrehzahl hinaus ohne großen Verschleiß möglich ist und die Motoren bei niedrigen Drehzahlen ein nahezu konstantes Drehmoment aufweisen.

Ein solcher Wechselrichter läßt sich als Brücke darstellen: vier steuerbare Leistungsschalter sind Brückenelemente; an zwei Punkten der Brücke liegt Gleichspannung an, wobei gewöhnlich ein Punkt geerdet ist (Ground) und dadurch der andere Punkt auf dem höheren Potential der Versorgungsspannung liegt; an den anderen beiden Diagonalpunkten der Brücke kann die Wechselspannung abgenommen werden. Die Signale einer Steuereinrichtung sorgen in der Weise für das Umpolen, daß sich der Pfad von den beiden Polen der Gleichspannungsquelle am Eingang zum Ausgang ständig kreuzt und dadurch die Ausgangsspannung ständig ihr Vorzeichen wechselt. Es bereitet keine Schwierigkeiten, die beiden Leistungsschalter der Brücke anzusteuern, die die Verbindung zum Spannungsbezugsnullpunkt (Ground) herstellen oder unterbrechen müssen. Die beiden anderen Leistungsschalter der Brücke arbeiten gegen ein Potential, das sich je nach Schaltzustand ständig gegenüber dem Spannungsbezugsnullpunkt ändert. Ein solches Potential-Floating bereitet bei der Ansteuerung der Transistoren, die vorzugsweise als Leistungsschalter eingesetzt werden, Schwierigkeiten, insbesondere bei einer hohen Gleichspannung (z.B. von mehr als 100 V).

Man begegnet diesem Ansteuerproblem bei den potentialmäßig hoch liegenden Leistungsschaltern durch den Einsatz von Optokopplern oder (bei Thyristoren) induktiven Übertragern. Neben dem Schaltungsaufwand stören bei diesen Lösungen auch die zusätzlichen Leistungsverluste, außerdem ist vor allem beim Einsatz von Optokopplern die Schaltfrequenz nach oben begrenzt.

.Der Erfindung liegt die Aufgabe zugrunde, bei einem Wechselrichter die Leistungsverluste bei der Aussteuerung der potentialmäßig hoch liegenden Schalter zu verringern und die Schaltfrequenz zu erhöhen.

Die Aufgabe wird von einem Wechselrichter gelöst, bei dem nur die beiden potentialmäßig tief liegenden Leistungsschalter von der Steuereinrichtung angesteuert werden, zwischen den potentialmäßig tief liegenden Leistungsschaltern und dem Wechselspannungsausgang jeweils eine Zenerdiode mit der Kathodenseite zum Leistungsschalter hin vorhanden ist und die Steuerspannung des korrespondierenden potentialmäßig hoch liegenden Schalters jeweils von der Kathodenseite der Zenerdiode abgegriffen wird und die Kathodenseite der Zenerdiode über einen Widerstand mit dem positiven Pol der Gleichspannungsquelle verbunden ist.

Besonders bevorzugte Leistungsschalter sind N-Kanal MOS-Transistoren, NPN-Bipolartransistoren oder Thyristoren.

Das Öffnen und Schließen der potentialmäßig tief liegenden Leistungsschalter erfolgt in bekannter problemloser Weise durch Steuerimpulse von einem Steuergerät. Die gemäß der Erfindung in den Strompfad eingefügten Zenerdioden haben in Vorwärtsrichtung eine kleine Durchlaßspannung, die sich am korrespondierenden, potentialmäßig hoch liegenden Schalter als negative Ansteuerspannung wiederfindet und somit den Schalter öffnet. Wird die eingefügte Zenerdiode invers betrieben, so erzeugt sie am korrespondierenden Leistungsschalter eine positive Ansteuerspannung, die bewirkt, daß der entsprechende Schalter schließt. Die Schaltungsanordnung ist so gewählt, daß bei Ansteuerung einer der potentialmäßig tief liegenden Schalter jeweils der potentialmäßig hoch liegende Schalter im benachbarten Brückenzweig durch die invers betriebene Zenerdiode geschlossen wird. Auf diese Weise erhält man einen Wechselrichterbetrieb, der nur durch die Aussteuerung der potentialmäßig tief liegenden Schalter erzeugt wird. Eine direkte Ansteuerung der potentialmäßig hoch liegenden Schalter ist somit durch die vorliegende Schaltungsanordnung nicht erforderlich. Mit dem Einsatz von N-Kanal MOS-Transistoren als Schalter werden Schaltfrequenzen von mehr als 100 kHz erreicht.

Als Leistungsschalter, insbesondere auch für hohe Spannungen, lassen sich verschiedene bekannte Elemente einsetzen, wobei die Ankopplung und die Größe der Steuerspannung an den Leistungsschalter angepaßt werden müssen, die aber alle durch die über der Zenerdiode abfallende Spannung geöffnet und geschlossen werden können. N-Kanal MOS-Transistoren sind für sehr hohe Spannungen geeignet und erlauben eine verlustarme Steuerung. NPN-Bipolartransistoren reduzieren die Herstellungskosten; mit Thyristoren läßt sich eine Schaltung mit besonders wenig Aufwand realisieren.

Ein besonders bevorzugtes Einsatzgebiet des erfindungsgemäßen Wechselrichters ist wegen der hohen Spannung und der sehr hohen oberen Frequenzgrenze (über 100 kHz) die Verwendung als Stromquelle für elektronische Sprengzünder.

Im folgenden werden, unter Bezugnahme auf die Zeichnung, Ausführungsbeispiele näher erläutert.

Es zeigen

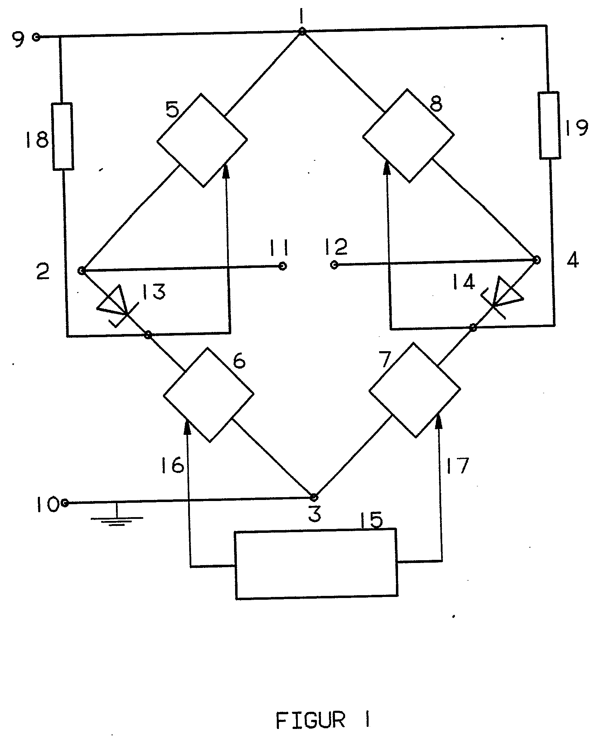

Figur 1 schematische Darstellung des Wechselrichters in Brükkenkonfiguration;

Figur 2 Wechselrichter mit vier N-Kanal MOS-Transistoren;

Figur 3 Wechselrichter mit vier NPN-Bipolartransistoren;

Figur 4 Wechselrichter mit zwei Thyristoren und zwei NPN-Bipolartransistoren.

Zwischen den vier Brückenpunkten 1, 2, 3, 4 sind Schalter 5, 6, 7, 8 angeordnet. An den Brückenpunkten 1 und 3 wird die Energie eingespeist (Gleichspannungsquelle U zwischen den Punkten 9 und 10); an den beiden anderen Diagonalpunkten kann bei 11 und 12 ein Wechselstrom/Wechselspannung abgenommen werden. Der Punkt 10 wird hier als Spannungsbezugsnullpunkt (Ground) gewählt.

Gemäß der Erfindung liegen in den potentialmäßig niedrigen Zweigen (Schalter 6 und 7) jeweils eine Zenerdiode 13, 14 mit den Kathodenseiten zu den Leistungsschaltern 6, 7 hin. Ein Steuergerät 15 besorgt dafür, daß jeweils nur ein Schalter offen ist. An den Klemmen 11, 12 kann bei dem Wechselrichter im Vorzeichen wechselnd näherungsweise die gleiche Spannung wie zwischen 9 und 10 abgenommen werden, wenn gleichzeitig die Schalter 6 und 8 öffnen, die Schalter 5 und 7 schließen oder nach einer vorwählbaren Periode alle vier Schalter gleichzeitig schalten, d.h. Schalter 5 und 7 öffnen und Schalter 6 und 8 schließen. Gemäß der Erfindung werden nur die Schalter 6 und 7 vom Steuergerät angesteuert; die Schalter 5 und 8 sind aufgrund der Zenerdioden 13 und 14 so mit den Schaltern 6 und 7 korreliert, daß sie zwangsweise mitschalten, wenn ein Impuls vom Steuergerät 15 auf die potentialmäßig tief liegenden Schalter gelangt.

Die Steuerspannung am Schalter 8 ist identisch mit der Spannung an der Zenerdiode 14. Je nachdem, ob die Diode invers oder vorwärts betrieben wird, legt sie den Schaltzustand eindeutig fest. Eine Spannung über der vorwärts betriebenen Zenerdiode 14 führt zu einem Öffnen des Schalters 8, wohingegen der Spannungsabfall an der invers betriebenen Zenerdiode 13 ausreicht, den Schalter 5 zu schließen. Wenn dagegen das Steuergerät 15 einen Impuls 16 aussendet, der den Schalter 6 schließt und den Schalter 7 durch einen Impuls 17 öffnet, führt der Spannungseinbruch über der Zenerdiode 13 zu einem Öffnen des Schalters 5, wohingegen der Schalter 8 geschlossen wird, weil der Spannungsabfall über der invers betriebenen Zenerdiode 14 als positive Ansteuerspannung wirkt. Die Widerstände 18, 19 sind erforderlich, damit die Zenerdioden invers betrieben werden können.

Entsprechend der Modulation vom Steuergerät 15 her steht zwischen den Klemmen 11 und 12 eine entsprechend getaktete Wechselspannung zur Verfügung.

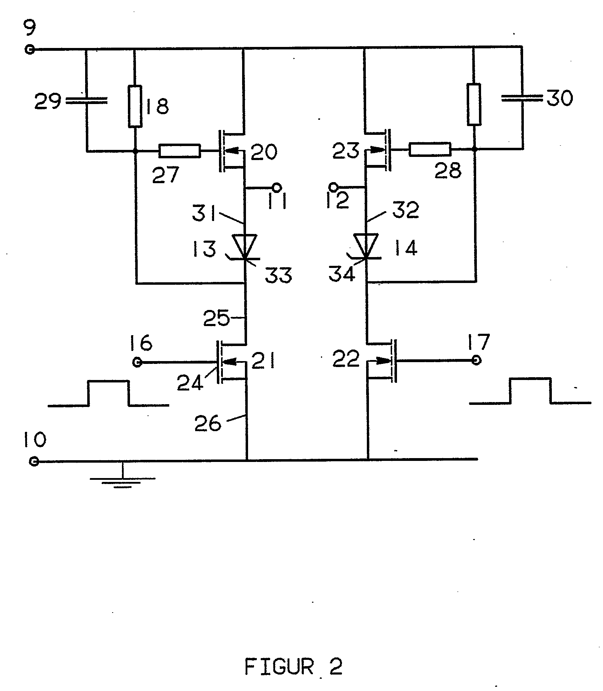

In den Figuren 2 bis 4 sind Wechselrichter mit verschiedenen Leistungsschaltern dargestellt. Es handelt sich hier wiederum nur um Prinzipskizzen, da die Schaltungsauslegung, ebenso wie ein Steuergerät, dem Fachmann bekannt sind.

Die vier Schalter 5, 6, 7, 8 sind in Figur 2 N-Kanal MOS-Transistoren 20, 21, 22, 23 (24 ist der Gate-, 25 der Drain-, 26 der Source-Anschluß). Die Widerstände 18, 19 dienen dem Inversbetrieb der Zenerdioden. Bei der vorwärts betriebenen Zenerdiode 13 bewirkt die negative Spannung zwischen Gate 24 und Source 26 die Sperrung des oberen Schalters 20. Die Kondensatoren 29, 30 dienen der schnellen Aufladung der parasitären Gate-Kapazität während der Schaltvorgänge. Die Widerstände 27, 28 sollen mögliche Eigenschwingungen bei hohen Frequenzen dämpfen. Die Anoden 31, 32 der Zenerdioden 13, 14 liegen grundsätzlich zur Last hin, die Kathoden 33, 34 zu den potentialmäßig tief liegenden Leistungsschaltern 21, 22. Bei einem Betrieb des Wechselrichters als bipolaren Stromgenerator müssen die potentialmäßig tief liegenden N-Kanal MOS-Transistoren zwischen Source 26 und Ground 10 mit Widerständen beschaltet werden.

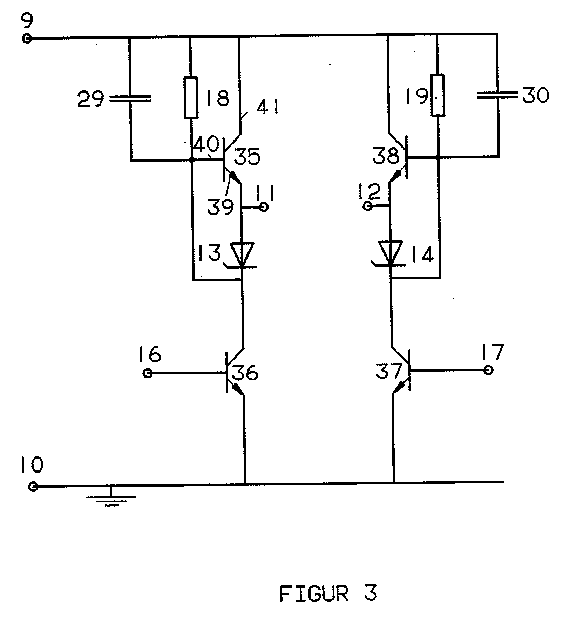

Ein Wechselrichter mit vier NPN-Bipolartransistoren (39 Emitter, 40 Basis, 41 Kollektor) ist in Figur 3 dargestellt.

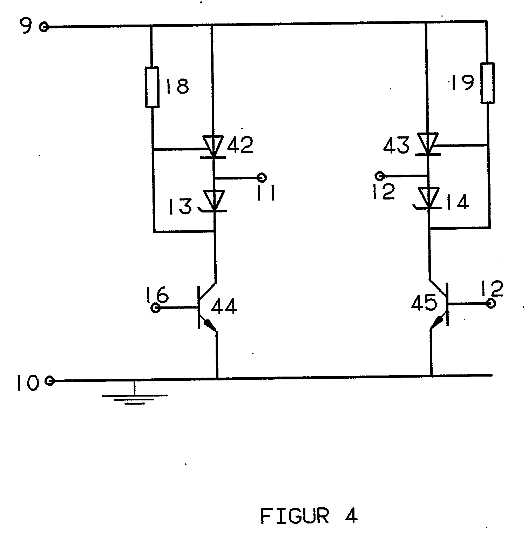

Eine weitere Schalterkombination zeigt Figur 4; die beiden hoch liegenden Schalter 5 und 6 sind hier Thyristoren 42, 43, während die beiden potentialmäßig tief liegenden Schalter 6, 7 hier zwei Bipolartransistoren 44, 45 sind.

## Ansprüche

1. Wechselrichter, enthaltend eine geerdete Gleichspannungsquelle (9, 10), vier steuerbare Leistungsschalter (5, 6, 7, 8), eine Steuereinrichtung (15) und einen Wechselspannungsausgang (11, 12), **dadurch gekennzeichnet,** daß nur die beiden potentialmäßig tief liegenden Leistungsschalter (6, 7) von der Steuereinrichtung (15) angesteuert werden, zwischen den potentialmäßig tief liegenden Leistungsschaltern (6, 7) und dem Wechselspannungsausgang (11, 12) jeweils eine Zenerdiode (13, 14) mit der Kathodenseite (28, 29) zum Leistungsschalter (6, 7) hin vorhanden ist und die Steuerspannung des korrespondierenden potentialmäßig hoch liegenden Leistungsschalters (5, 8) jeweils von der Kathodenseite (33, 34) der Zenerdiode (13, 14) abgegriffen wird und die Kathodenseite der Zenerdiode (13, 14) über einen Widerstand (18, 19) mit dem positiven Pol der Gleichspannungsquelle (9, 10) verbunden ist.

2. Wechselrichter nach Anspruch 1, dadurch gekennzeichnet, daß wenigstens zwei Schaltelemente als N-Kanal MOS-Transistoren (20, 21, 22, 23) ausgebildet sind.

3. Wechselrichter nach Anspruch 1, dadurch gekennzeichnet, daß wenigstens zwei Schaltelemente als NPN-Bipolartransistoren (35, 36, 37, 38) ausgebildet sind.

4. Wechselrichter nach Anspruch 1, dadurch gekennzeichnet, daß wenigstens zwei Schaltelemente als Thyristoren (42, 43) ausgebildet sind.

FIGUR 1

FIGUR 2

FIGUR 3

FIGUR 4